# EUROPEAN PATENT APPLICATION

(11) **EP 4 067 220 A1**
(43) Date of publication of application: **05.10.2022**
(21) Application number: 22161391.2
(22) Date of filing: 10.03.2022
(51) Int. Cl.: B63H 5/10, B63H 5/14, B63H 1/16

(54) **PROPULSOR FOR MARINE VESSEL, AND MARINE VESSEL**

(30) Priority: 30.03.2021 JP 2021057913
(71) Applicant: Mitsubishi Heavy Industries, Ltd., Tokyo 1008332 (JP)
(72) Inventor: HOSONO, Kazuki, Tokyo, 1008332 (JP); KAWABUCHI, Makoto, Tokyo, 1008332 (JP); YAMADA, Takuyoshi, Tokyo, 1008332 (JP); KUBOTA, Masaya, Tokyo, 1008332 (JP)
(74) Representative: Studio Torta S.p.A.

(57) **Abstract**

Object

To suppress vortex generation from a blade tip of a blade and an increase in friction loss generated during propulsion of a marine vessel.

Solving Means

A propulsor for a marine vessel for propelling a marine vessel includes: a duct provided below a hull of the marine vessel; and a propeller rotatably disposed inside the duct, wherein the propeller includes a blade and a cylindrical part having a cylindrical shape, surrounding the blade, and fixed to a blade tip of the blade, and in a cross sectional view in an extending direction of the duct, assuming that a virtual line passing through a leading edge and a trailing edge of the duct is a first line, and that a line connecting, from the leading edge to the trailing edge of the duct, centers of inscribing circles that are each in contact with both an inner surface and an outer surface of the duct is a second line, the second line is positioned closer to a side of the outer surface of the duct than the first line.

## Description

### Technical Field

The present disclosure relates to a propulsor for a marine vessel that propels a marine vessel.

### Background Art

For example, Patent Document 1 to 3 disclose a propulsor for a marine vessel that includes a duct and a propeller that is rotatably disposed inside the duct. The propeller includes a blade and a ring that surrounds the blade and is fixed to a blade tip of the blade, and suppresses vortex generation from the blade tip of the blade.

### Citation List

### Patent Literature

Patent Document 1: JP 2013-100013 A
Patent Document 2: JP 60-044899 UM-A
Patent Document 3: JP 59-092296 A

### Summary of Invention

### Technical Problem

However, the inclusion of a ring in the propeller increases friction loss that occurs during propulsion of the marine vessel.

The present disclosure has been made in view of the above-described problems, and an object of the present disclosure is to provide a propulsor for a marine vessel capable of suppressing vortex generation from a blade tip of a blade and an increase in friction loss generated during propulsion of the marine vessel.

### Solution to Problem

In order to achieve the above object, a propulsor for a marine vessel according to the present disclosure is a propulsor for a marine vessel for propelling a marine vessel, including: a duct provided below a hull of the marine vessel; and a propeller rotatably disposed inside the duct, wherein the propeller includes a blade and a cylindrical part having a cylindrical shape, surrounding the blade, and fixed to a blade tip of the blade, and in a cross sectional view in an extending direction of the duct, assuming that a virtual line passing through a leading edge and a trailing edge of the duct is a first line, and that a line connecting, from the leading edge to the trailing edge of the duct, centers of inscribing circles that are each in contact with both an inner surface and an outer surface of the duct is a second line, the second line is positioned closer to a side of the outer surface of the duct than the first line.

### Advantageous Effects of Invention

According to the propulsor for a marine vessel of the present disclosure, it is capable of suppressing vortex generation from a blade tip of a blade and an increase in friction loss generated during propulsion of the marine vessel.

### Brief Description of Drawings

FIG. 1 is a diagram schematically illustrating a configuration of a marine vessel including a propulsor for a marine vessel according to one embodiment.
FIG. 2 is a diagram schematically illustrating a configuration of a propulsor for a marine vessel according to one embodiment.
FIG. 3 is a diagram for describing a configuration of a duct according to one embodiment.
FIG. 4 is a graph showing the relationship between propeller efficiency and a propeller load coefficient.
FIG. 5 is a schematic diagram illustrating a configuration of a propulsor for a marine vessel according to another embodiment.

### Description of Embodiments

Hereinafter, a propulsor for a marine vessel according to embodiments of the present disclosure will be described based on drawings. Such embodiments illustrate one aspect of the present disclosure, does not limit the present disclosure, and can be arbitrarily changed within the scope of the technical idea of the present disclosure.

### Configuration of Marine Vessel

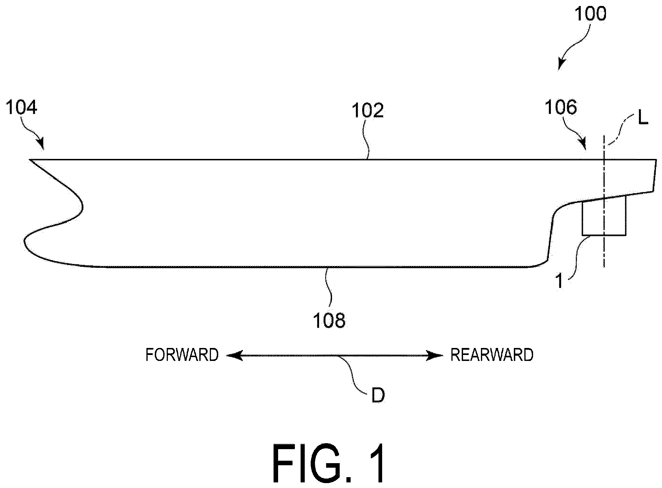

FIG. 1 is a diagram schematically illustrating a configuration of a marine vessel 100 including a propulsor for a marine vessel 1 according to one embodiment. As illustrated in FIG. 1, the marine vessel 100 includes a hull 102 and the propulsor for a marine vessel 1 attached to the hull 102 to propel the marine vessel 100.

The hull 102 has a bow portion 104 that is a portion located at the front of the hull 102, a stern portion 106 that is a portion located at the back of the hull 102, and a bottom portion 108. The bow portion 104 has a shape that reduces resistance experienced by the hull 102 from fluids such as seawater. In the present disclosure, of a front-back direction D of the hull 102, a direction from the stern portion 106 toward the bow portion 104 is referred to as a forward direction, and a direction from the bow portion 104 toward the stern portion 106 is referred to as a rearward direction.

The propulsor for a marine vessel 1 is attached to the bottom portion 108 so as to be positioned on the stern portion 106 side of the hull 102. The marine vessel 100 is configured such that the advance direction of the hull 102 is adjusted by rotating the propulsor for a marine vessel 1 about an axis L extending in the up-down direction (so-called a propulsor for a marine vessel of azimuth type). In some embodiments, although not illustrated, the marine vessel 100 includes a rudder for adjusting the advance direction of the hull 102.

Hereinafter, a configuration of the propulsor for a marine vessel 1 according to one embodiment will be described in detail.

### Configuration of Propulsor for Marine Vessel

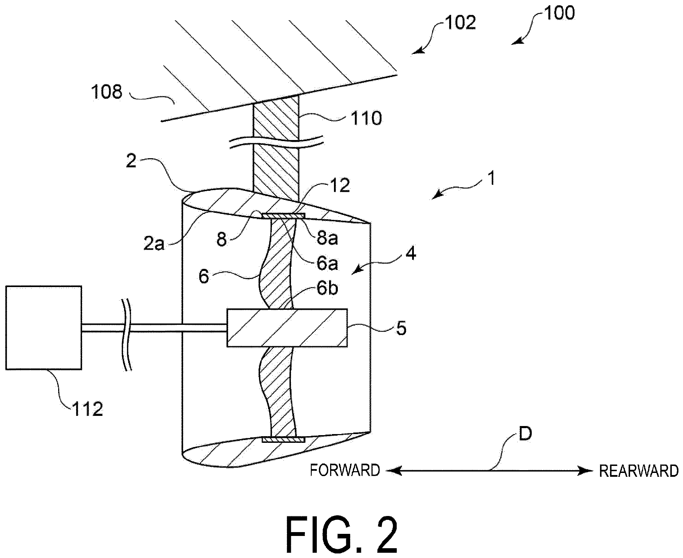

FIG. 2 is a diagram schematically illustrating a configuration of the propulsor for a marine vessel 1 according to one embodiment. As illustrated in FIG. 2, the propulsor for a marine vessel 1 includes a duct 2 provided below the hull 102 of the marine vessel 100 and a propeller 4 rotatably disposed inside the duct 2. The propulsor for a marine vessel 1 is a so-called propulsor for a marine vessel of duct propeller type.

The duct 2 extends along the front-back direction D. In the form illustrated in FIG. 2, the duct 2 is supported by a strut 110 that extends downward from the bottom portion 108 of the hull 102. A specific configuration of the duct 2 will be described later. Although the duct 2 is supported by the strut 110 in the form illustrated in FIG. 2, the present disclosure is not limited to this form as long as the duct 2 is provided below the hull 102. For example, the duct 2 may be supported by a shaft that rotates a rotor shaft 5 (a shaft that connects a motor 112 and the rotor shaft 5 in FIG. 2), or may be attached to the bottom portion 108 of the hull 102.

The propeller 4 includes the rod-like rotor shaft 5 extending along the extending direction (front-back direction D) of the duct 2, a blade 6, and a tubular cylindrical part 8 (ring) surrounding the blade 6.

The rotor shaft 5 is connected to the motor 112 provided in the hull 102, for example, and is rotated by rotational power generated by the motor 112. In the blade 6, a blade root 6b is fixed to the rotor shaft 5, and a blade tip 6a is fixed to an inner surface 8a of the cylindrical part 8. For this reason, the blade 6 and the cylindrical part 8 are configured to rotate around the rotor shaft 5 along with the rotation of the rotor shaft 5. In the form illustrated in FIG. 2, the propulsor for a marine vessel 1 is configured to be driven by a driving force supplied from the motor 112, but the present disclosure is not limited to this form. For example, the propulsor for a marine vessel 1 may be driven by a driving force supplied from a diesel engine or a gas turbine.

The cylindrical part 8 is accommodated in a groove 12 formed in an inner surface 2a of the duct 2. The groove 12 is continuous over the entire circumference of the inner surface 2a of the duct 2. The cylindrical part 8 is rotatable around the rotor shaft 5 as a center in a state of being accommodated in the groove 12.

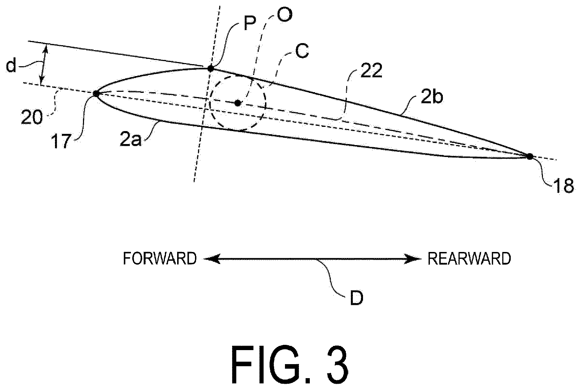

A specific configuration of the duct 2 will be described. FIG. 3 is a diagram for describing a configuration (duct cross section) of the duct 2 according to one embodiment. When the duct 2 is cut along the extending direction (front-back direction D) of the duct 2, one duct cross section and the other duct cross section located opposite to the one duct cross section across the rotor shaft 5 are respectively formed. In one embodiment, the one duct cross section and the other duct cross section are axisymmetric to each other about the rotor shaft 5. In FIG. 3, one of the one duct cross section and the other duct cross section is illustrated. It should be noted that the present disclosure is not limited to the case where the one duct cross section and the other duct cross section are axisymmetric to each other about the rotor shaft 5. The duct 2 may be configured such that the one duct cross section and the other duct cross section are asymmetric with respect to the rotor shaft 5.

As illustrated in FIG. 3, the duct cross section is formed by the inner surface 2a and an outer surface 2b of the duct 2 and has an airfoil shape. It is assumed that a virtual line of straight line shape, passing through a leading edge 17 and a trailing edge 18 of the duct 2, is a first line 20. Further, it is assumed that a line connecting each center O of an inscribing circle C in contact with both the inner surface 2a and the outer surface 2b of the duct 2, from the leading edge 17 to the trailing edge 18 of the duct 2, is a second line 22. That is, the first line 20 corresponds to a chord line in a blade such as a turbine blade, and the second line 22 corresponds to a camber line in the blade.

As illustrated in FIG. 3, the second line 22 is positioned closer to the outer surface 2b of the duct 2 than the first line 20. In the form illustrated in FIG. 3, the first line 20 is inclined toward the inner side of the duct 2, as advancing from the leading edge 17 toward the trailing edge 18 of the duct 2. The second line 22 is positioned closer to the outer surface 2b side of the duct 2 than the first line 20, from the leading edge 17 toward the trailing edge 18 of the duct 2.

In the form illustrated in FIG. 3, a position P where the distance, in the direction orthogonal to the first line 20, between the outer surface 2b of the duct 2 and the first line 20 is the maximum, is positioned on the leading edge 17 side of the duct 2. In the front-back direction D, a position where the propeller 4 is disposed is not particularly limited. However, for example, by disposing the propeller 4 rearward of the position P, it is possible to reduce the size of the radius of the cylindrical part 8 of the propeller 4 and reduce the friction loss due to the cylindrical part 8.

### Action and Effect of Propulsor for Marine Vessel

Action and effect of a propulsor for a marine vessel 1 according to one embodiment of the present disclosure will be described. According to one embodiment, a propeller 4 includes a cylindrical part 8 that surrounds the blade 6 and that is fixed to the blade tip 6a of the blade 6. Therefore, it is possible to suppress a vortex generation from the blade tip 6a of the blade 6.

Among the friction losses generated during propulsion of the marine vessel 100, the magnitude of the friction loss due to the cylindrical part 8 is dominated by the velocity of the fluid flowing in the vicinity of the cylindrical part 8. According to one embodiment, since the second line 22 is positioned closer to the outer surface 2b side of the duct 2 than the first line 20, the inner surface 2a of the duct 2 has a shape that slows down the velocity of fluid such as seawater flowing into the duct 2. That is, the inner surface 2a of the duct 2 functions as a pressure side in the blade. Therefore, the velocity of the fluid flowing in the vicinity of the cylindrical part 8 can be slowed, and the magnitude of the friction loss due to the cylindrical part 8 can be reduced. Therefore, an increase in friction loss occurring during propulsion of the marine vessel 100 can be suppressed.

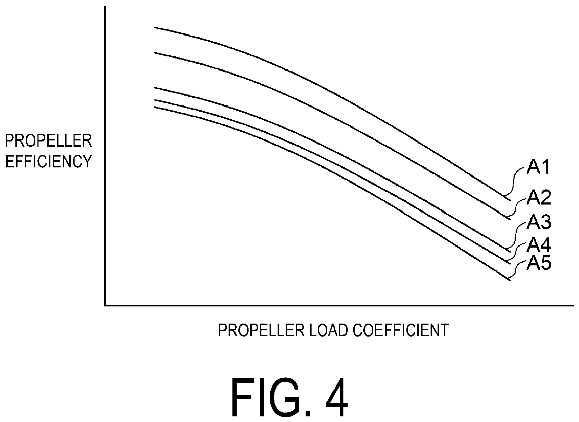

FIG. 4 is a graph showing the relationship between propeller efficiency and a propeller load coefficient. In FIG. 4, the horizontal axis indicates the propeller load coefficient, and the vertical axis indicates the propeller efficiency. In FIG. 4, A1 represents an ideal value of propeller efficiency, A2 represents propeller efficiency obtained by subtracting, from A1, loss due to swirl flow discharged rearward, A3 represents propeller efficiency obtained by subtracting, from A2, friction loss due to the cylindrical part 8, A4 represents propeller efficiency obtained by subtracting, from A3, loss due to various resistances, and A5 represents propeller efficiency obtained by subtracting, from A4, loss due to deviation from the optimal design of the blade 6. The loss due to various resistances is, for example, loss caused by resistance received from fluid by the rotor shaft 5 or the blade 6 provided inside the duct 2, fluid friction generated on a surface of the blade 6, or the like.

When the propeller is an open propeller that includes a blade but does not include a cylindrical part, the blade is designed such that a load of a blade tip region (including a blade tip and the vicinity of the blade tip) is reduced. By reducing the load of the blade tip region, the vortex generated from the blade tip of the blade can be reduced, and the loss due to various resistances can be reduced. However, the design of the blade deviates from an optimum design for setting the propeller efficiency to an ideal value, and a loss occurs due to the deviation from the optimum design. According to the one embodiment described above, the propeller 4 includes the cylindrical part 8, so that a vortex generation from the blade tip 6a of the blade 6 can be suppressed. Thus, the design of the blade 6 can be brought closer to the optimal design. That is, the difference between A4 and A5 in FIG. 4 can be reduced, and the actual propeller efficiency can be brought closer to A1.

Further, according to the above-described one embodiment, since the inner surface 2a of the duct 2 functions as the pressure side in the blade, the magnitude of the friction loss due to the cylindrical part 8 can be reduced, as compared with a case where the inner surface 2a of the duct 2 does not function as the pressure side in the blade. That is, the difference between A2 and A3 in FIG. 4 can be reduced, and the actual propeller efficiency can be brought closer to A1.

According to one embodiment, the first line 20 is inclined toward the inner side of the duct 2, as advancing from the leading edge 17 toward the trailing edge 18 of the duct 2. For this reason, the inner surface 2a of the duct 2 can effectively reduce the velocity of the fluid flowing into the duct 2, as compared with a case where the first line 20 is inclined so as to be directed toward the outside of the duct 2, as advancing from the leading edge 17 toward the trailing edge 18 of the duct 2.

According to one embodiment, the duct cross section has an airfoil shape and the inner surface 2a of the duct 2 serves as the pressure side in the blade. Therefore, the velocity of the fluid flowing in the vicinity of the cylindrical part 8 can be slowed, and the magnitude of the friction loss due to the cylindrical part 8 can be reduced.

A propulsor for a marine vessel of a conventional duct propeller type is often configured such that a duct cross section has an airfoil shape and an inner surface of the duct functions as a suction side in the blade in order to generate a forward thrust force. However, when the propeller includes a blade and a cylindrical part (ring) surrounding the blade, the inner surface of the duct functions as a suction side, so that the velocity of fluid flowing in the vicinity of the ring increases, and the magnitude of friction loss due to the cylindrical part 8 increases. On the other hand, in accordance with the propulsor for a marine vessel 1 according to one embodiment, the inner surface 2a of the duct 2 functions as a pressure side, so that the generation of thrust force is suppressed, but the magnitude of friction loss due to the cylindrical part 8 can be reduced. As a result, the propulsor for a marine vessel 1 according to the one embodiment can increase the propeller efficiency as compared with the conventional propulsor for a marine vessel.

According to one embodiment, since the position P is positioned on the leading edge 17 side of the duct 2, the velocity of the fluid flowing into the duct 2 can be slowed down on the leading edge 17 side of the duct 2, and the length of the duct 2 in the extending direction can be suppressed.

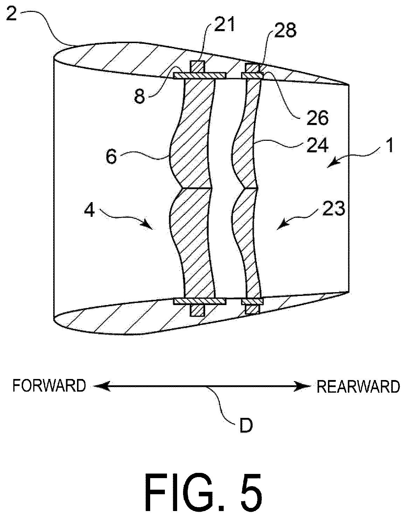

Meanwhile, in the one embodiment illustrated and described in FIG. 2, the propulsor for a marine vessel 1 includes the shaft drive propeller 4 in which the blade 6 and the cylindrical part 8 rotate in accordance with the rotation of the rotor shaft 5, but the present disclosure is not limited to this form. FIG. 5 is a diagram schematically illustrating a configuration of a propulsor for a marine vessel 1 according to another embodiment.

As illustrated in FIG. 5, in another embodiment, the propulsor for a marine vessel 1 is built in the duct 2 and includes a built-in motor 21 for rotating the propeller 4. In particular, the cylindrical part 8 is configured to rotate by rotational power supplied from the built-in motor 21. The blade 6 is rotated with the rotation of the cylindrical part 8. According to such a configuration, it is not necessary to arrange the rotor shaft 5 in the duct 2, which can reduce loss caused by resistance received from fluid by the structures arranged in the duct 2.

In the form illustrated in FIG. 5, the propulsor for a marine vessel 1 includes a contra-rotating propeller 23 disposed inside the duct 2, and a built-in motor 28 built in the duct 2 and configured to rotate the contra-rotating propeller 23 in a direction opposite to the rotational direction of the propeller 4. The contra-rotating propeller 23 includes a cylindrical part 26 having a cylindrical shape and configured to be rotatable by rotational force supplied from a built-in motor 28, and a blade 24 that is surrounded by the cylindrical part 26 and that has a blade tip fixed to an inner surface of the cylindrical part 26. According to such a configuration, the contra-rotating propeller 23 generates a reverse flow of the propeller 4, and the propulsion efficiency of the propulsor for a marine vessel 1 can be improved by the contra-rotating effect. It should be noted that in some embodiments, the contra-rotating propeller 23 may be configured such that the blade 24 and the cylindrical part 26 rotate by rotation of the rotor shaft 5. That is, the contra-rotating propeller 23 may be configured as a shaft drive type.

The contents described in each of the above embodiments are grasped as follows, for example.

[1] A propulsor for a marine vessel (1) according to the present disclosure is a propulsor for a marine vessel for propelling a marine vessel (100), including: a duct (2) provided below a hull (102) of the marine vessel; and a propeller (4) rotatably disposed inside the duct, wherein the propeller includes a blade (6) and a cylindrical part (8) having a cylindrical shape, surrounding the blade, and fixed to a blade tip (6a) of the blade, and in a cross sectional view in an extending direction of the duct, assuming that a virtual line passing through a leading edge (17) and a trailing edge (18) of the duct is a first line (20), and that a line connecting, from the leading edge to the trailing edge of the duct, centers (O) of inscribing circles (C) that are each in contact with both an inner surface (2a) and an outer surface (2b) of the duct is a second line (22), the second line is positioned closer to a side of the outer surface of the duct than the first line.

In accordance with the configuration according to the above [1], since the propeller includes a cylindrical part that surrounds the blade and that is fixed to the blade tip of the blade, it is possible to suppress vortex generation from the blade tip.

In accordance with the configuration according to the above [1], the second line connecting centers of inscribing circles from the leading edge to the trailing edge of the duct is positioned closer to the outer surface side of the duct than the first line passing through the leading edge and the trailing edge of the duct. That is, the inner surface of the duct has a shape (so-called pressure side) that reduces the velocity of the fluid flowing into the duct. For this reason, the velocity of the fluid flowing in the vicinity of the cylindrical part can be slowed down, and the friction loss due to the cylindrical part can be reduced. Thus, it is possible to suppress an increase in friction loss occurring during propulsion of the marine vessel.

[2] In some embodiments, in the configuration according to the above [1], the first line is inclined toward an inner side of the duct, as advancing from the leading edge toward the trailing edge of the duct.

In accordance with the configuration according to the above [2], the inner surface of the duct can effectively reduce the velocity of the fluid flowing into the duct, as compared with a case where the first line is inclined so as to be directed toward the outside of the duct, as advancing from the leading edge toward the trailing edge of the duct.

[3] In some embodiments, in the configuration according to the above [1] or [2], the second line extends from the leading edge to the trailing edge of the duct and is positioned closer to the side of the outer surface of the duct than the first line.

In accordance with the configuration according to the above [3], the inner surface of the duct can function as a pressure side in a blade such as a turbine blade. For this reason, the velocity of the fluid flowing in the vicinity of the cylindrical part can be slowed down, and the friction loss due to the cylindrical part can be reduced.

[4] In some embodiments, in the configuration according to any one of the above [1] to [3], a position (P) where a distance (d), in a direction orthogonal to the first line, between the outer surface of the duct and the first line is the maximum, is positioned on a side of the leading edge of the duct.

In accordance with the configuration according to the above [4], the velocity of the fluid flowing into the duct can be slowed down on the leading edge side of the duct, and the length of the duct in the extending direction can be suppressed.

[5] In some embodiments, in the configuration according to any one of the above [1] to [4], a built-in motor (21) built in the duct and configured to rotate the propeller is further provided.

In accordance with the configuration according to the above [5], since the built-in motor is not disposed inside the duct but is built in the duct, it can suppress the built-in motor becoming resistance.

[6] In some embodiments, in the configuration according to any one of the above [1] to [5], a contra-rotating propeller (23) rotatably disposed inside the duct in a direction opposite to a rotational direction of the propeller is further provided.

In accordance with the configuration according to the above [6], the contra-rotating propeller generates a reverse flow of the propeller, and the propulsion efficiency of the propulsor for a marine vessel can be improved by the contra-rotating effect.

[7] A marine vessel according to some embodiments includes the propulsor for a marine vessel according to any one of the above [1] to [6].

In accordance with the configuration according to the above [7], it is possible to provide a marine vessel including the propulsor for a marine vessel described in any one of the above [1] to [6].

### Reference Signs List

1 Propulsor for marine vessel
2 Duct
2a Inner surface of duct
2b Outer surface of duct
4 Propeller
6 Blade
6a Blade tip of blade
8 Cylindrical part
8a Inner surface of cylindrical part
12 Groove
17 Leading edge of duct
18 Trailing edge of duct
20 First line
21 Built-in motor
22 Second line
23 Contra-rotating propeller
100 Marine vessel
102 Hull
C Inscribing circle
O Center of inscribing circle
P Position

## Claims

1. A propulsor for a marine vessel for propelling a marine vessel, comprising:
a duct provided below a hull of the marine vessel; and
a propeller rotatably disposed inside the duct,
wherein
the propeller includes
a blade and
a cylindrical part having a cylindrical shape, surrounding the blade, and fixed to a blade tip of the blade, and
in a cross sectional view in an extending direction of the duct, assuming that a virtual line passing through a leading edge and a trailing edge of the duct is a first line, and that a line connecting, from the leading edge to the trailing edge of the duct, centers of inscribing circles that are each in contact with both an inner surface and an outer surface of the duct is a second line, the second line is positioned closer to a side of the outer surface of the duct than the first line.

2. The propulsor for a marine vessel according to claim 1, wherein the first line is inclined toward an inner side of the duct, as advancing from the leading edge toward the trailing edge of the duct.

3. The propulsor for a marine vessel according to claim 1 or 2, wherein the second line extends from the leading edge to the trailing edge of the duct and is positioned closer to the side of the outer surface of the duct than the first line.

4. The propulsor for a marine vessel according to any one of claims 1 to 3, wherein a position where a distance, in a direction orthogonal to the first line, between the outer surface of the duct and the first line is the maximum, is positioned on a side of the leading edge of the duct.

5. The propulsor for a marine vessel according to any one of claims 1 to 4, further comprising:
a built-in motor built in the duct and configured to rotate the propeller.

6. The propulsor for a marine vessel according to any one of claims 1 to 5, further comprising:
a contra-rotating propeller rotatably disposed inside the duct in a direction opposite to a rotational direction of the propeller.

7. A marine vessel comprising:
the propulsor for a marine vessel according to any one of claims 1 to 6.
